# EUROPÄISCHE PATENTSCHRIFT

(11) **EP 2 585 851 B1**
(45) Veröffentlichungstag und Bekanntmachung des Hinweises auf die Patenterteilung: **04.04.2018**
(21) Anmeldenummer: 11748286.9
(22) Anmeldetag: 22.06.2011
(51) Int. Cl.: G01S 19/34, G08B 21/18

(54) **VERFAHREN ZUR ORTUNG VON LEBEWESEN UND OBJEKTEN MIT GERINGEM STROMBEDARF**
METHOD FOR LOCATING LIVING BEINGS AND OBJECTS, HAVING LOW POWER REQUIREMENT
PROCÉDÉ À FAIBLE CONSOMMATION D'ÉNERGIE POUR LA LOCALISATION D'ÊTRES VIVANTS ET D'OBJETS

(30) Priorität: 22.06.2010 CH 996102010
(43) Veröffentlichungstag der Anmeldung: 01.05.2013
(73) Patentinhaber: PET TRACER AG, 4806 Wikon (CH)
(72) Erfinder: ELMIGER, Thomas, CH-8926 Kappel (CH)
(74) Vertreter: OK pat AG
(86) Internationale Anmeldenummer: PCT/EP2011/060512
(87) Internationale Veröffentlichungsnummer: WO 2011/161194

(56) Entgegenhaltungen:
- US-A1- 2004 113 836
- US-A1- 2005 186 968
- US-A1- 2009 002 188

## Beschreibung

### ERFINDUNGSGEBIET

Die vorliegende Erfindung betrifft ein Verfahren zur Ortung von Lebewesen und Objekten mit geringem Strombedarf, welche periodisch die Position dieser Lebewesen oder Objekte meldet und damit die Aufzeichnung einer Spur ermöglicht.

### HINTERGRUND DER ERFINDUNG

Anordnungen mit einem Positionsmelder und einem Sender zur Übertragung sowohl auf ein Mobilnetz als auch auf ein eigenes Funknetz sind bekannt und verbreitet (z. B. Schlüsselfinder).

Die Anwendung und Verbreitung von bekannten Positionsmeldern 11 ist aber durch deren Gewicht stark beschränkt. Während Personen oder grössere Tiere diese herkömmlichen Melder problemlos tragen können, sind diese Positionsmelder für kleinere Tiere wie z. B. Katzen viel zu schwer und deshalb nicht einsetzbar.

Um das Gewicht der Positionsmelder zu senken, sind unterschiedliche Massnahmen getroffen worden. Da die Stromversorgung, d. h. die Batterien/ Akku einen erheblichen Anteil des Gesamtgewichts ausmachen, sind diese auf das absolut kleinste zu reduzieren. Kleinere bzw. leichtere Batterien / Akkus beeinflussen aber die Energiebilanz des Systems. Deshalb sind Prozessoren und im Allgemeinen Komponenten bevorzugt, die auf geringen Stromverbrauch optimiert sind. Aber trotz grosser Fortschritte im Bereich von Komponenten mit niedrigem Stromverbrauch, ist der Energieverbrauch aller Komponenten, die für die Ortung und die Übermittlung von Positionsdaten nötigt sind, immer noch zu hoch, um das Gewicht der Stromversorgung genügend reduzieren zu können.

Eine Möglichkeit, die hohen Strombedürfnisse zu senken, ist, dass man alle Komponenten, die zurzeit nicht benötigt werden, temporär ausschaltet. Die Schwierigkeit darin ist festzustellen, wann genau eine Komponente benötigt wird. Komponenten, wie z. B. der Sender / Empfänger, werden eingeschaltet wenn Daten zu senden /empfangen sind. US 2009/002188A1 offenbart ein Ortungsgerät, worin Sender / Empfänger bzw. Ortungskomponenten ausgeschaltet werden, wenn das Gerät in einem Ruhezustand befindet. Es ist aber schwieriger festzustellen wann und wie oft die Ortungskomponenten, wie z. B. der Positionsmelder, einzuschalten sind. Dies ist sehr wichtig, da eingeschaltete Positionsmelder im Vergleich mit anderen Komponenten viel Strom verbrauchen.

Zum weiteren Reduzieren des Strombedarfs von Positionsmeldern sind einige Systeme entwickelt worden, die Beschleunigungsdaten verwenden, um festzustellen, ob sich das System bewegt oder nicht bewegt. In solchen Systemen, wenn sich das System nicht bewegt, wird der Positionsmelder ausgeschaltet. Sobald der Beschleunigungsmesser eine Bewegung detektiert, wird der Positionsmelder wieder eingeschaltet, um das System wieder orten zu können.

### ZU LÖSENDE TECHNISCHE AUFGABE

Diese Systeme, bei denen ein Signal des Beschleunigungssensors die Einschaltung des Positionsmelders auslöst, sind für Tiere nur beschränkt effektiv, da sich Tiere - ausser wenn die schlafen - ständig bewegen, wenn auch nur um sich zu kratzen.

Die Aufgabe der Erfindung ist daher, ein Verfahren bereitzustellen, das die Ortung und Aufzeichnung einer Spur eines Lebewesens ermöglicht und gleichzeitig den Strombedarf optimiert, sodass dadurch das Gewicht des Systems deutlich reduziert werden kann.

### OFFENBARUNG DER ERFINDUNG

Die oben-definierte Aufgabe der Erfindung wird durch ein Verfahren gelöst, wobei Verhaltensmerkmale von beweglichen Lebewesen und Objekten zur Optimierung des Strombedarfs benutzt werden. Gemäss der vorliegenden Erfindung wird zwischen kleinen lokalen Bewegungen und wirklichen Ortswechseln unterschieden. Dadurch wird ermöglicht, dass die Ortung und Aufzeichnung der Spur des Lebewesens mit reduziertem Strombedarf aufrechterhalten werden kann.

Die Verhaltensmerkmale werden ausgewertet, um Hinweise auf eine Änderung der Position zu detektieren. Erst wenn diese Auswertung der Verhaltensmerkmale auf eine wirkliche Änderung der Position hindeutet, werden die Ortungskomponenten (wie z. B. der Positionsmelder) eingeschaltet.

Verhaltensmerkmale umfassen im Kontext der vorliegenden Erfindung Bewegung, Umgebungshelligkeit und Signalstärke des Positionsmelders oder der Sendeeinheit.

### VORTEILHAFTE WIRKUNGEN

Der wichtigste Vorteil der vorliegenden Erfindung liegt darin, dass bewegliche Lebewesen und Objekte zuverlässig geortet werden können und deren Spur zuverlässig aufgezeichnet werden kann, während der Strombedarf reduziert ist. Dies ermöglicht, das Gewicht der Stromversorgung und damit des ganzen Systems zu reduzieren. Durch die erhebliche Senkung des Gewichts wird ermöglicht, den Einsatzbereich des Ortungssystems auf kleine Tiere wie z. B. Katzen zu erweitern, die nur sehr geringe Zusatzgewichte ertragen würden.

Durch das systematische Ausnützen der Verhaltensweisen der zu verfolgenden Objekte ermöglicht die vorliegende Erfindung ein hochwirksames Energiemanagement.

### KURZE BESCHREIBUNG DER ZEICHNUNG

Weitere Einzelheiten und Vorteile der Erfindung werden im Folgenden anhand von Ausführungsbeispielen und mit Bezug auf die Zeichnung beschrieben. Sie zeigt:

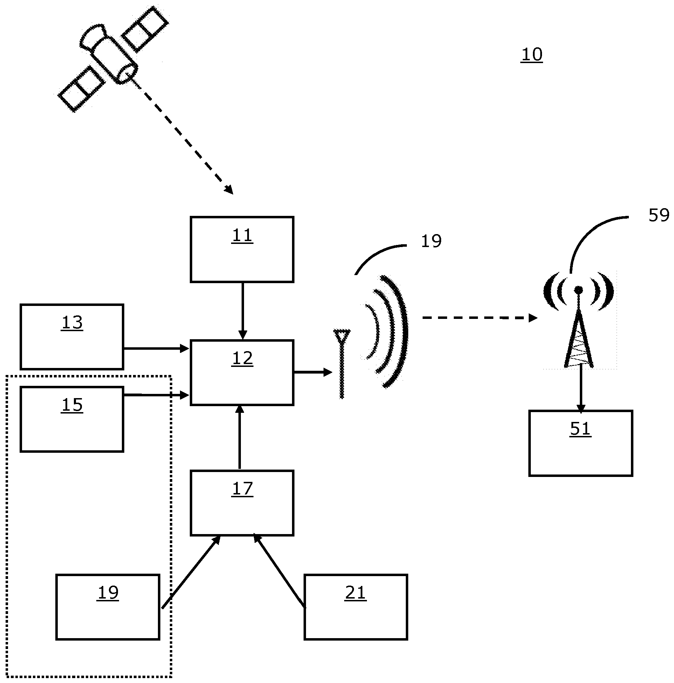

- Fig. 1: zeigt eine vereinfachte strukturelle Übersicht eines Ortungssystems gemäss der vorliegenden Erfindung.

### DETAILLIERTE BESCHREIBUNG DER BEVORZUGTEN AUSFÜHRUNGSFORMEN

In dieser Patentanmeldung werden bestimmte Begriffe benutzt, deren Interpretation nicht auf den spezifisch gewählten Begriff beschränkt werden soll. Diese Begriffe beziehen sich vielmehr auf dem allgemeinen Konzept dahinter.

Die Erfindung betrifft ein Verfahren nach unabhängigem Anspruch 1, um die Ortung von Personen, beweglichen Objekten und Haustieren, im Besonderen von Katzen so zu ermöglichen, dass mit einem minimalen Strombedarf von der Stromversorgung 17 eine Spur ihrer Bewegung aufgezeichnet werden kann, um den aktuellen Aufenthaltsort des Ortungsgerätes 10 zu ermitteln. Das Verfahren ist zum Lokalisieren verschiedener Lebewesen und Objekte geeignet. Da es primär zum Auffinden von Katzen entwickelt wurde, wird das zu verfolgende Objekt im Folgenden stets "Katzen" genannt.

Das Verfahren ist auf Einrichtungen anwendbar, die typischerweise einen Aufbau gemäss Abbildung 1 haben: Mit einem Positionsmelder 11 (z. B. GPS) wird der Standort der Katze ermittelt, via eine Sendeeinheit 19 zu einem (meist stationären) Empfänger 59 übertragen und dort ausgewertet und angezeigt. Zusätzlich werden die Bewegungen der Katze durch einen lokalen (d.h. am Tier befestigten) Bewegungsmelder 13 (z. B. Beschleunigungsmesser) ermittelt. Ebenfalls wird die Helligkeit der Umgebung mittels eines am Tier befestigten Helligkeitssensors 15 gemessen.

Der Empfänger 59 kann Teil eines Mobilnetzes (z. B. GPRS) sein oder ein dedizierter Empfänger 59, der Teil des Systems ist. Der lokale Bewegungsmelder 13 kann so ausgelegt werden, dass er selbst auch Energie abgibt, um die Stromversorgung 17 zu laden (Beschleunigungsgenerator). Ebenfalls kann der Helligkeitssensor 15 mit dem Erzeugen von Solarstrom kombiniert werden. Der Positionsmelder 11 wird meist mit GPS realisiert, obwohl das Verfahren auch auf andere Techniken wie Peilen oder GPRS Lokalisierung anwendbar ist.

Dem Verfahren liegen folgende Randbedingungen zugrunde:
I. Die Katze bewegt sich. Von ihrem Standort aus werden die Positionsdaten erfasst und an einen zentralen (meist festen) Ort mittels der Sendeeinheit 19 übermittelt, wo sie ausgewertet und eventuell angezeigt werden (Auswertungsanzeige 51).
II. Die Ortung der Position der Katze mittels des Positionsmelders 11 ist nicht immer möglich. Die Katze kann sich an einen Ort begeben, der zu stark abgeschirmt ist, so dass keine zuverlässige Funkverbindung mehr möglich ist.
III. Die Übermittlung der Position über eine Funkverbindung mittels der Sendeeinheit 19 ist aus den gleichen Gründen ebenfalls nicht immer möglich.
IV. Der Energiebedarf für das Ermitteln der Position und/oder das Übermitteln dieser Daten an eine Auswertestelle 51 ist erheblich und kann beim aktuellen Stand der Technik nicht durch eine leichte, kleine Stromversorgung 17 (z. B. Batterie) ständig aufrecht erhalten werden, ausser man würde ein häufiges Nachladen in Kauf nehmen. Dies ist aber im Besonderen bei Katzen unerwünscht.

Das hier beschriebene Verfahren dient dazu, trotz dieser Randbedingungen eine Spur der Standorte der Katze aufzuzeichnen, die es erlaubt, die Katze zu jedem Zeitpunkt mit hoher Wahrscheinlichkeit finden zu können.

Die Stromversorgung 17 (z. B. Batterie) speist einen Prozessor 12, welcher auf geringen Stromverbrauch optimiert ist. Dieser steuert den Positionsmelder 11, die Sendeeinheit 19 und die Sensoren nicht nur indem er Daten austauscht, sondern auch indem er sie gezielt ein- und ausschaltet bzw. in einen Idle- oder Hibernate-Modus versetzt.

Eine konventionelle Regeleinrichtung für die Stromversorgung 17 (wie z. B. eine Hochleistungsbatterie) versorgt diese mit Energie von verschiedenen Quellen, im Folgenden "Energiequellen" genannt. Gegenwärtig sind als solche eine induktive Einkopplung (ca. 150kHz) zum konzentrierten Laden und/oder eine permanente Ladung mit Solarzellen vorgesehen. Optional kann Energie auch aus der Bewegung (Dynamo mit Schwungmasse), über eine Nutzung der Körperwärme (Peltier/Seebeck Effekt gegenüber Umgebung) oder ähnlichen Methoden gewonnen und der Regeleinrichtung zugeführt werden.

Diese Regeleinrichtung ("Batteriemanagement" genannt) ist eng mit einem Low-Power Prozessor 12 verbunden, der dauernd mit Energie versorgt wird und ev. Teile des Batteriemanagements übernehmen kann, soweit dies nicht durch einen autonomen Schaltkreis abgedeckt ist. Dieser Prozessor 12 kann den Input von den Solarzellen zusätzlich als Helligkeitssensor 15 verwenden. Falls keine Solarzellen zur Energiegewinnung zum Einsatz gelangen, sind stattdessen spezielle Sensoren 15 vorzusehen.

Das Batteriemanagement schaltet nun die einzelnen Komponenten des Ortungsgerätes 10 so dazu, dass nur die für eine bestimmte Aufgabe benötigten Teile mit Strom versorgt werden. Wenn eine Komponente einen Idle Modus unterstützt, kann dieser auch verwendet werden. Wo "Einschwingzeiten" zu berücksichtigen sind, werden die entsprechenden Komponenten mit einem Vorlauf vor der effektiven Nutzung mit Strom versorgt. Dis gilt vor allem für einen Quarz Oszillator und den Beschleunigungssensor 13.

Folgende Phasen werden unterschieden:
A. Ruhemodus (ausser dem Prozessor 12 und dem Batteriemanagement) ist keine Komponente aktiv. Auch der Steuerprozessor 12 selbst ist im Low-Power Modus mit reduzierter Leistung. Dieser Fall ist normalerweise vorherrschend.
B. Status Check. In einem bestimmten Status Check Intervall (z. B. alle 2 Sekunden) wird eine Serie von Beschleunigungsmessungen durchgeführt und (optional) die Helligkeitsdifferenz bestimmt. Diese Verhaltensdaten werden mit speziellen Algorithmen in dem Prozessor 12 ausgewertet, die im Folgenden beschrieben werden. Wenn diese auf eine Änderung der Position hindeuten (die Katze bewegt sich), wird das Tracking Intervall graduell reduziert, bis dieses einen unteren Grenzwert erreicht. Wenn dieser Status Check einen gefährlichen Trend erkennt (schneller Lauf, z. B. Flucht, oder plötzlicher starker Helligkeitsverlust, z. B. Katze geht in einen Innenraum), wird sofort in den Trackingmodus gewechselt und das Tracking Intervall auf das Minimum gesetzt. Der Status Check kann auch das Messen der Signalstärke des Signals des Positionsmelders 11 umfassen als einen zusätzlichen Indikator. Sobald ohnehin eine Messung mit dem Positionsmelder 11 erfolgt, wird natürlich die Signalstärke erfasst und dient als Kriterium.
C. Trackingmodus - Bestimmung der Position des Ortungsgerätes 10. Hier werden alle Komponenten eingeschaltet und eine Positionsbestimmung mit Positionsmelder 11 wird durchgeführt. Das Ergebnis wird mittels der Sendeeinheit 19 zur Auswertung weitergeleitet. Die Bestimmung der Position des Ortungsgerätes 11 erfolgt automatisch in einem bestimmten Tracking Intervall, das durch den Status Check laufend modifiziert wird. Wenn die Katze ruht, erhöht sich dieses Tracking Intervall schrittweise bis zu einem oberen Grenzwert. Bewegt sie sich, verringert sich das Tracking Intervall proportional zur Geschwindigkeit bzw. Helligkeitsänderung. Bei einem gefährlichen Trend wird es sofort auf das Minimum reduziert und das Ortungsgerät 10 wird unverzüglich in dem Trackingmodus umgeschaltet. Die Bestimmung des Tracking Intervalls kann zusätzlich den Ladestand der Stromversorgung 17 (z. B. Batterie) berücksichtigen. Ist dieser schwach, wird das Tracking Intervall nach einer Bestimmung der Position des Ortungsgerätes 10 schnell wieder erhöht und nur bei gefährlichen Trends schnell reduziert.

Als gefährlicher Trend wird eine der folgenden Situationen eingestuft:
i) Die Helligkeit reduziert sich um eine Grössenordnung zwischen zwei Verhaltensmessungen.
ii) Die Summe der Beschleunigungen der Katze liegt in den drei Koordinaten über einem Grenzwert, der deutlich höher ist als derjenige, der z. B. beim "Putzen" einer Katze entsteht.
iii) Die Empfangsqualität des Signals des Positionsmelders 11 und/oder der Sendeeinheit 19 (z. B. Funksignals) sinkt um mehr als einem Grenzwert (z. B. 6dB) gegenüber der letzten Verhaltensmessung und eine gewisse Bewegung ist erkennbar.

Die Situationen i) und iii) deuten darauf hin, dass sich die Katze gerade an einen Ort begibt, an dem die Funkverbindung der Sendeeinheit 19 und/oder der Positionsmelder 11 Empfang abbrechen könnte. In einem solchen Fall kann man zwar den aktuellen Aufenthaltsort nicht genau ermitteln, aber man kennt die Spur, auf welcher die Katze zu einem solchen Ort gelangt ist. Dies reicht in den meisten Fällen aus, um die Katze zu finden. Sobald die Katze den Ort mit Funkschatten wieder verlässt, erhält man eine Fortsetzung der unterbrochenen Spur.

Die Situation ii) kann bedeuten, dass sich die Katze auf der Flucht befindet und unübliche Handlungen folgen können (Versteck suchen). Jedenfalls ist damit zu rechnen, dass sich die Position sehr schnell ändert und daher ein Ausfall auch nur eines einzigen Signals dazu führt, dass man sehr ungenaue Positionswerte hat oder gar die Spur verliert.

Die Auswertung der Verhaltensdaten beim Status Check erfolgt in dem Prozessor 12 typischerweise nach einem Algorithmus folgender Art:
a) Die Beschleunigung entlang der drei Achsen des kartesisches Koordinatensystems wird addiert (geometrische Addition wäre zwar korrekt, ist aber nicht erforderlich). Da eine Serie von mehreren Messungen durchgeführt wird, können diese mit der Trapezmethode integriert werden. Daraus ergibt sich eine Abschätzung der Bewegungsgeschwindigkeit. Diese Berechnung erfolgt nicht vektoriell, da die Lage des Halsbandes an dem das Ortungsgerät 10 vorzugsweise befestigt ist ohnehin nicht ausreichend konstant ist.
b) Das Spektrum der Beschleunigung auf der Achse mit den höchsten Werten wird mit einer groben FFT (Fast Fourier Transformation) spektral zerlegt. Sind die spektralen Anteile über einen Grenzwert (z. B. 2Hz) dominant, und übersteigen einen fixen Schwellwert nicht, ist das ein starker Hinweis auf ein stationäres Spiel bzw. auf das "Putzen" der Katze.
c) Die Veränderung der Helligkeit zwischen zwei Status Checks wird mit dem Helligkeitssensor 15 ermittelt, indem bei jedem Status Check mehrere Messungen (>10) durchgeführt und gemittelt werden.
d) Aus den Positionsmessungen mit dem Positionsmelder 11 beim Trackingmodus kann ebenfalls eine Geschwindigkeit ermittelt werden. Diese wird je nach Tracking Intervall und Technologie des Positionsmelders 11 gewichtet werden.
e) Der resultierende Veränderungsfaktor vf ermittelt sich primär aus a) und c), wobei a) stärker gewichtet ist. Ist sowohl a) als auch b) über einem kritischen Wert (0.5ms/s, 6dB), gilt das unbedingt. Sind aber beide unter diesen Werten, dann wird vf = vf*0.1, falls die Bedingung b) erfüllt ist. Der Wert von "vf" wird im Status Check verwendet, um das Tracking Intervall anzupassen.

Alle diese Regeln dienen dazu, möglichst aktuelle Positionsinformationen zu erhalten, auch wenn sich die Katze schnell bewegt, ganz besonders, wenn sie sich in einen Funkschatten begibt, ohne dass rein stationäre Bewegungen zu viele Messungen auslösen und damit unnötig Energie verschwenden.

Es wird davon ausgegangen, dass auf der Grundlage der hier beschriebenen spezifischen Struktur viele Variationen vorgenommen werden können, ohne über den Rahmen der Erfindung, wie in den folgenden Ansprüchen definiert, hinauszugehen.

**REFERENZLISTE:**

| | |
|---|---|
| Ortungsgerät | 10 |
| Positionsmelder | 11 |
| Prozessor | 12 |
| Bewegungsmelder | 13 |
| Batteriemanagement | 14 |
| Helligkeitssensor | 15 |
| Stromversorgung | 17 |
| Sendeeinheit | 19 |
| Empfänger 59 | 59 |
| Auswertungsanzeige | 51 |

## Patentansprüche

1. Verfahren zur Ortung von beweglichen Lebewesen oder Objekten mittels eines am Lebewesen oder Objekt befindlichen Ortungsgerätes (10) mit einem Positionsmelder (11), umfassend die folgenden Schritte:
- Umschaltung des Ortungsgerätes (10) in einen Ruhemodus, in dem Komponenten des Ortungsgerätes (10) ausgeschaltet oder in einem Sparbetrieb geschaltet werden;
- Durchführen eines Status-Checks in einem bestimmten Status Check Intervall umfassend die folgende Schritte:
- Durchführen von Verhaltensmessungen zum Sammlen von Verhaltensdaten;
- Auswerten der Verhaltensdaten;
- falls die Auswertung der Verhaltensdaten einen gefährlichen Trend erkennt, Umschaltung des Ortungsgerätes (10) in einem Trackingmodus;
- im Trackingmodus:
- Bestimmung der Position des Ortungsgerätes (10) und Übertragung des Ergebnisses mittels einer Sendeeinheit (19) in einem bestimmten Tracking-Intervall,
**dadurch gekennzeichnet, dass:**
- das Durchführen von Verhaltensmessungen das Durchführen von Messungen der Empfangsqualität eines Positionsmelders (11) und /oder einer Sendeeinheit (19) umfasst,
- wobei ein gefährlicher Trend erkannt wird, wenn die gemessene Empfangsqualität des Positionsmelders (11) und/oder der Sendeeinheit (19) um mehr als einen Grenzwert gegenüber der letzten Verhaltensmessung reduziert und aufgrund der Verhaltensmessungen eine Bewegungsspur ermittelt werden kann.

2. Verfahren gemäss Anspruch 1,
**dadurch gekennzeichnet, dass:**
- wenn während des Status-Checks, die Auswertung der Verhaltensdaten auf eine Änderung der Position hindeutet, wird das Tracking-Intervall graduell reduziert; und
- wenn während des Status-Checks, die Auswertung der Verhaltensdaten auf keine Änderung der Position hindeutet, wird das Tracking-Intervall graduell erhöht.

3. Verfahren gemäss Anspruch 2,
**dadurch gekennzeichnet, dass:**
- wenn das Tracking-Intervall einen unteren Grenzwert erreicht hat, wird das Ortungsgerät (10) in den Trackingmodus umgeschaltet; und
- wenn das Tracking-Intervall einen oberen Grenzwert erreicht hat, wird das Ortungsgerät (10) in den Ruhemodus umgeschaltet.

4. Verfahren gemäss einem der Ansprüche 2 bis 3,
**dadurch gekennzeichnet, dass** falls die Auswertung der Verhaltensdaten einen gefährlichen Trend erkennt, wird das Tracking-Intervall auf dem unteren Grenzwert reduziert.

5. Verfahren gemäss einem der Ansprüche 2 bis 3,
**dadurch gekennzeichnet, dass** die Bestimmung des Tracking-Intervalls den Ladezustand einer Stromversorgung (17) berücksichtigt wird, sodass wenn der Ladezustand einer Stromversorgung (17) schwach ist, wird das Tracking-Intervall nach einer Bestimmung der Position des Ortungsgerätes (10) wieder erhöht und nur falls die Auswertung der Verhaltensdaten einen gefährlichen Trend erkennt wird es wieder schnell reduziert.

6. Verfahren gemäss einem der Ansprüche 2 bis 5,
**dadurch gekennzeichnet, dass:**
- das Durchführen von Verhaltensmessungen das Durchführen von Beschleunigungsmessungen mittels eines Bewegungsmelders (13) umfasst, und
- der gefährliche Trend das Überschreiten eines Grenzwerts der gemessenen Beschleunigungen, vorzugsweise der Summe der gemessenen Beschleunigungen in drei Koordinaten umfasst.

7. Verfahren gemäss Anspruch 5,
**dadurch gekennzeichnet, dass:**
- die Beschleunigungsmessungen entlang der drei Achsen des Kartesisches Koordinatensystems mittels eines Dreiachsenbewegungsmelders (13) durchgeführt werden; und
- das Auswerten der Verhaltensdaten die folgenden Schritte umfasst:
- Addieren, vorzugsweise geometrisches Addieren, der gemessenen Beschleunigung entlang der drei Achsen;
- Integrieren, vorzugsweise mit der Trapezmethode, einer Serie von mehreren Verhaltensdaten, die während konsekutiven Beschleunigungsmessungen gemessen wurden;
- Spektralen Zerlegen eines Spektrums der Beschleunigung auf der Achse mit den höchsten Werten, vorzugsweise mittels einer Fast Fourier Transformation;
wobei wenn die spektralen Anteile über einen Grenzwert, z. B. 2Hz, dominant sind, und einen fixen Schwellwert nicht übersteigen, ist das ein starker Hinweis auf eine stationäre Bewegung, z. B. das Spiel bzw. das "Putzen" einer Katze und die Auswertung der Verhaltensdaten auf keine Änderung der Position hindeutet.

8. Verfahren gemäss einem der Ansprüche 6 oder 7, **dadurch gekennzeichnet, dass** das Durchführen von Beschleunigungsmessungen zusätzlich Positionsmessungen mittels Positionsmelders (11) umfasst, wobei die Positionsmessungen mittels Positionsmelders (11) je nach Tracking Intervall und Technologie des Positionsmelders (11) gewichtet wird.

9. Verfahren gemäss einem der Ansprüche 1 bis 8,
**dadurch gekennzeichnet, dass:**
- das Durchführen von Verhaltensmessungen das Durchführen von Helligkeitsmessungen mittels eines Helligkeitssensors (15) umfasst, und
- der gefährliche Trend die Reduzierung der gemessenen Helligkeit um eine Grössenordnung zwischen zwei Verhaltensmessungen umfasst.

10. Verfahren gemäss Anspruch 9,
**dadurch gekennzeichnet, dass** die Veränderung der Helligkeit zwischen zwei Verhaltensmessungen ermittelt wird, indem bei jeder Verhaltensmessung mehrere Messungen, vorzugsweise mehr als zehn Messungen, durchgeführt und gemittelt werden.

11. Verfahren gemäss Ansprüchen 7 und 9,
**dadurch gekennzeichnet, dass** ein Veränderungsfaktor (vf) primär aus dem Auswerten der Verhaltensdaten gemäss Anspruch 7 und das Durchführen von Helligkeitsmessungen gemäss Anspruch 9 ermittelt wird.

12. Verfahren gemäss einem der Ansprüche 1 bis 11,
**dadurch gekennzeichnet, dass** die Komponenten des Ortungsgeräts (10), die in dem Ruhemodus Ausgeschaltet oder in einem Sparbetrieb geschaltet werden, umfassen:
- einen Positionsmelder (11) zur Bestimmung der Position des Ortungsgerätes (10); und/oder
- einen Bewegungsmelder (13); und/oder
- eine Sendeeinheit (19) zum Übertragen von Positions- und Bewegungsdaten; und/oder
- einen Prozessor (12); und/oder
- Helligkeitssensor (15).

## Claims

1. A method for locating mobile living beings or objects by means of a locating device (10) which is located on the living being or object with a position indicator (11), comprising the following steps:
- switching the locating device (10) into a sleep mode in which components of the locating device (10) are switched off or switched to an idle mode;
- performing a status check in a specific status check interval, comprising the following steps:
- performing behavioral measurements to collect behavioral data;
- evaluating the behavioral data;
- if the evaluation of the behavioral data detects a dangerous trend, switching the locating device (10) to a tracking mode;
- in the tracking mode:
- determining the position of the locating device (10) and transmitting the result by means of a transmitting unit (19) in a specific tracking interval,
**characterized in that**
- performing behavioral measurements comprises performing measurements of the reception quality of a position indicator (11) and/or a transmission unit (19),
- wherein a dangerous trend is detected when the measured reception quality of the position indicator (11) and/or the transmission unit (19) is reduced by more than a threshold value compared to the last behavioral measurement and a movement track can be determined on the basis of the behavioral measurements.

2. A method according to claim 1, **characterized in that**
- if, during the status check, the evaluation of the behavioral data indicates a change in position, the tracking interval is gradually reduced; and
- if, during the status check, the evaluation of the behavioral data does not indicate a change in position, the tracking interval is gradually increased.

3. A method according to claim 2, **characterized in that**
- if the tracking interval has reached a lower threshold, the locating device (10) is switched to the tracking mode; and
- if the tracking interval has reached an upper threshold, the locating device (10) is switched to the sleep mode.

4. A method according to one of the claims 2 to 3, **characterized in that** if the evaluation of the behavioral data detects a dangerous trend, the tracking interval is reduced to the lower limit.

5. A method according to one of the claims 2 to 3, **characterized in that** the determination of the tracking interval takes into account the state of charge of a power supply (17), so that when the state of charge of a power supply (17) is weak, the tracking interval is increased again after a determination of the position of the locating device (10), and only if the evaluation of the behavioral data detects a dangerous trend will it quickly be reduced again.

6. A method according to one of the claims 2 to 5, **characterized in that:**
- performing behavioral measurements comprises performing acceleration measurements by means of a motion detector (13), and
- the dangerous trend comprises exceeding a threshold value of the measured accelerations, preferably the sum of the measured accelerations in three coordinates.

7. A method according to claim 5, **characterized in that:**
- the acceleration measurements along the three axes of the Cartesian coordinate system are performed by means of a three-axis motion detector (13); and
- evaluating the behavioral data comprises the following steps:
- adding, preferably geometrically adding, the measured acceleration along the three axes;
- integrating, preferably with the trapezoidal method, a series of multiple behavioral data measured during consecutive acceleration measurements;
- spectral decomposition of a spectrum of the acceleration on the axis with the highest values, preferably by means of a fast Fourier transformation; wherein, when the spectral components are dominant over a threshold, e.g. 2 Hz, and do not exceed a fixed threshold level, then this is a strong indication of a stationary movement, e.g. the playing or the "cleaning" of a cat and the evaluation of the behavioral data indicates no change in position.

8. A method according to one of the claims 6 or 7, **characterized in that** conducting acceleration measurements additionally comprises position measurements by means of a position detector (11), wherein the position measurements by means of a position detector (11) are weighted depending on the tracking interval and technology of the position detector (11).

9. A method according to one of the claims 1 to 8, **characterized in that:**
- conducting behavioral measurements comprises performing brightness measurements by means of a brightness sensor (15), and
- the dangerous trend comprises reducing the measured brightness by an order of magnitude between two behavioral measurements.

10. A method according to claim 9, **characterized in that** the change in brightness is determined between two behavioral measurements by carrying out and averaging several measurements, preferably more than ten measurements, for each behavioral measurement.

11. A method according to claims 7 and 9, **characterized in that** a change factor (vf) is determined primarily from the evaluation of the behavioral data according to claim 7 and the carrying out of brightness measurements according to claim 9.

12. A method according to one of the claims 1 to 11, **characterized in that** the components of the locating device (10), which are switched off in the sleep mode or switched to an idle mode, comprise:
- a position detector (11) for determining the position of the locating device (10); and/or
- a motion detector (13); and/or
- a transmitting unit (19) for transmitting position and motion data; and/or
- a processor (12); and/or
- a brightness sensor (15).

## Revendications

1. Procédé de localisation d'êtres vivants ou d'objets mobiles à l'aide d'un appareil de localisation (10) placé sur lesdits êtres vivants ou sur lesdits objets, comprenant un détecteur de position (11) et comprenant les étapes suivantes:
- commuter l'appareil de localisation (10) dans un mode de repos dans lequel les composants de l'appareil de localisation (10) sont désactivés ou commutés en mode économie d'énergie ;
- effectuer un contrôle d'état selon un intervalle de contrôle d'état défini comprenant les étapes suivantes :
• effectuer des mesures de comportement afin de collecter des données de comportement ;
• analyser les données de comportement ;
• lorsque l'analyse des données de comportement détecte une tendance dangereuse, commuter l'appareil de localisation (10) dans un mode de poursuite ;
dans le mode de poursuite :
• déterminer la position de l'appareil de localisation (10) et transmettre le résultat à l'aide d'une unité émettrice (19) selon un intervalle de poursuite défini,
**caractérisé en ce que** :
- l'effectuer de mesures de comportement comprend l'effectuer de mesures de la qualité de réception d'un détecteur de position (11) et/ou d'une unité émettrice (19),
- une tendance dangereuse étant détectée lorsque la qualité de réception mesurée du détecteur de position (11) et/ou de l'unité émettrice (19) est réduite de plus d'une valeur seuil par rapport à la dernière mesure de comportement et qu'une trace de mouvement peut être identifiée en raison des mesures de comportement.

2. Procédé selon la revendication 1, **caractérisé en ce que** :
- lorsque pendant le contrôle d'état, l'analyse des données de comportement indique une modification de la position, l'intervalle de poursuite est progressivement réduit ; et
- lorsque pendant le contrôle d'état, l'analyse des données de comportement n'indique aucune modification de la position, l'intervalle de poursuite est progressivement augmenté.

3. Procédé selon la revendication 2, **caractérisé en ce que** :
- lorsque l'intervalle de poursuite a atteint une valeur seuil inférieure, l'appareil de localisation (10) est commuté en mode poursuite ; et
- lorsque l'intervalle de poursuite a atteint une valeur seuil supérieure, l'appareil de localisation (10) est commuté en mode repos.

4. Procédé selon l'une des revendications 2 à 3, **caractérisé en ce que**, dans le cas où l'analyse des données de comportement détecte une tendance dangereuse, l'intervalle de poursuite est réduit à la valeur seuil inférieure.

5. Procédé selon l'une des revendications 2 à 3, **caractérisé en ce que** la détermination de l'intervalle de poursuite tient compte du niveau de charge d'une alimentation électrique (17), de sorte que lorsque le niveau de charge d'une alimentation électrique (17) est faible, l'intervalle de poursuite est de nouveau augmenté après la détermination de la position de l'appareil de localisation (10), et uniquement lorsque l'analyse des données de comportement détecte une tendance dangereuse, l'intervalle est de nouveau vite réduit.

6. Procédé selon l'une des revendications 2 à 5, **caractérisé en ce que** :
- l'effectuer de mesures de comportement comprend l'effectuer de mesures d'accélération à l'aide d'un détecteur de mouvement (13) ; et
- la tendance dangereuse comprend le dépassement d'une valeur seuil des accélérations mesurées, de préférence de la somme des accélérations mesurées à trois coordonnées.

7. Procédé selon la revendication 5, **caractérisé en ce que** :
- les mesures d'accélération sont effectuées le long des trois axes du système de coordonnées cartésien à l'aide d'un détecteur de mouvement à trois axes (13) ; et
- l'analyse des données de comportement comprend les étapes suivantes consistant à :
• additionner, de préférence additionner géométriquement l'accélération mesurée le long des trois axes ;
• intégrer, de préférence avec la méthode de trapèze, une série de plusieurs données de comportement qui ont été mesurées sur plusieurs mesures d'accélération consécutives ;
• décomposer spectralement un spectre de l'accélération sur l'axe comportant les valeurs les plus élevées, de préférence à l'aide d'une transformation de Fourier rapide ;
dans lequel, lorsque les parties spectrales dominent au-delà d'une valeur seuil, par ex. 2 Hz, et ne dépassent pas une valeur seuil fixe, cela constitue une forte indication d'un mouvement stationnaire, par ex. le jeu ou le « toilettage » d'un chat et l'analyse des données de comportement n'indique aucune modification de la position.

8. Procédé selon l'une des revendications 6 ou 7, **caractérisé en ce que** l'effectuer de mesures d'accélération comprend en plus des mesures de position à l'aide d'un détecteur de position (11), les mesures de position à l'aide du détecteur de position (11) étant pondérées selon l'intervalle de poursuite et la technologie du détecteur de position (11).

9. Procédé selon l'une des revendications 1 à 8, **caractérisé en ce que** :
- l'effectuer de mesures de comportement comprend l'effectuer de mesures de luminosité à l'aide d'un capteur de luminosité (15), et
- la tendance dangereuse comprend la diminution de la luminosité mesurée d'un ordre de grandeur entre deux mesures de comportement.

10. Procédé selon la revendication 9, **caractérisé en ce que** le changement de luminosité est déterminé entre deux mesures de comportement, à chaque mesure de comportement plusieurs mesures étant effectuées et pondérées, de préférence plus de dix mesures.

11. Procédé selon les revendications 7 et 9, **caractérisé en ce qu'**un facteur de changement (vf) est déterminé principalement à partir de l'analyse des données de comportement selon la revendication 7 et de l'effectuer de mesures de luminosité selon la revendication 9.

12. Procédé selon l'une des revendications 1 à 11, **caractérisé en ce que** les composants de l'appareil de localisation (10) qui sont commutés en mode repos ou en mode économie d'énergie, comprennent :
- un détecteur de position (11) pour déterminer la position de l'appareil de localisation (10) ; et/ou
- un détecteur de mouvement (13) ; et/ou
- une unité émettrice (19) pour transmettre les données de position et de mouvement ; et/ou
- un processeur (12) ; et/ou
- un capteur de luminosité (15).
